(19) Europäisches Patentamt

European Patent Office

Office européen des brevets

(11) **EP 0 675 089 B1**

## (12) EUROPÄISCHE PATENTSCHRIFT

(45) Veröffentlichungstag und Bekanntmachung des Hinweises auf die Patenterteilung:
**09.07.1997 Patentblatt 1997/28**

(51) Int. Cl.$^6$: **C04B 14/04**, C04B 28/02

(21) Anmeldenummer: **95103550.0**

(22) Anmeldetag: **11.03.1995**

(54) **Hilfsmittel für mineralische Bindemittelsysteme**

Additive for mineral binder systems

Adjuvant pour des systèmes de liant minéral

(84) Benannte Vertragsstaaten:
**AT BE CH DE DK ES FR GB IT LI NL SE**

(30) Priorität: **28.03.1994 DE 4410728**

(43) Veröffentlichungstag der Anmeldung:
**04.10.1995 Patentblatt 1995/40**

(73) Patentinhaber: **SÜD-CHEMIE AG**
**D-80333 München (DE)**

(72) Erfinder:
• **Coutelle, Helmut, Dr.**
**D-85356 Freising (DE)**

• **Dziwok, Klaus, Dr.**
**D-85368 Moosburg (DE)**

(74) Vertreter: **Patentanwälte**
**Dipl.-Ing. R. Splanemann**
**Dr. B. Reitzner**
**Dipl.-Ing. K. Baronetzky**
**Tal 13**
**80331 München (DE)**

(56) Entgegenhaltungen:
**EP-A- 0 409 774**      **CH-A- 459 858**
**DE-A- 2 126 521**

**Beschreibung**

Baustoffgemische wie Mörtel, Estriche, Putze, Baukleber usw. enthalten neben Bindemitteln, wie Zement, Kalk oder Gips, und Zuschlägen, wie Sand oder Steinmehl, zumeist noch Additive, wie Hydrophobierungsmittel, Wasserretentionshilfsmittel, Verzögerer, Beschleuniger, Luftporenbildner, Verflüssiger usw..

Die Mengen dieser einzelnen Additive liegen in der Gesamtmischung meist unter 1 Gew.-%, oft sogar noch weit unter 0,1 Gew.-%. Die Hilfsmittel unterscheiden sich dabei in ihrem physikalischen Erscheinungsbild zudem noch oft stark von den übrigen Komponenten des Bindemittelgemisches, d.h. sie weisen z.T. ein viel niedrigeres spezifisches Gewicht bzw. ein niedrigeres Schüttgewicht auf, oder sie liegen als Flüssigkeit vor. Diese Eigenschaften machen es schwierig, die Additive optimal im Bindemittelgemisch zu verteilen. Die physikalische Mischung von kleinsten Mengen an sehr leichten Pulvern mit großen Mengen relativ schwerer Bestandteile, wie sie bei den Bindemitteln und Zuschlagsstoffen vorliegen, bereitet große Probleme und erfordert einen hohen Mischaufwand. Flüssige Additive können andererseits zu Klumpenbildungen bzw., wenn sie in Wasser gelöst sind, zum Aushärten des Bindemittels führen.

Die homogene Einmischung von Additiven oder Hilfsmitteln erfordert daher einen sehr hohen apparativen und mechanischen Aufwand. Die hohe Wirksamkeit dieser Additive - dokumentiert z.B. durch eine Einsatzmenge von 0,05 Gew.-% - erlaubt nicht einmal kleinste Konzentrationsschwankungen dieser Hilfsmittel. Eine Lösungsmöglichkeit ist daher ihre Zugabe nicht in reiner Form, sondern als "verdünntes" Material, aufgebracht auf einen Träger.

So ist in der EP-A-0 409 774 ein Gemisch aus Lignosulfaten und Polyphosphaten sowie einem Fertigungsmittel beschrieben, das als Verzögerungsmittelsystem für hydraulisch härtende Zemente geeignet ist. Dabei wird auch eine mineralische Komponente, wie Vermiculit, Perlit, Bentonit oder Montmorillonit, in einer Zugabemenge von etwa 30 bis 60 Gew.-% als Zuschlagsstoff eingesetzt. Diese mineralische Komponente hat die Eigenschaft, Wasser zu adsorbieren und zu quellen. Weitere Wirkungen werden nicht beobachtet und festgestellt.

In der JP-A-61 006 164 ist ein Granulat beschrieben, das 20 bis 90 Gew.-% eines Hilfsmittels (Melaminsulfonat-Formaldehydkondensat) enthält, das mit Hilfe von 10 bis 80 Gew.-% Bentonit als Pelletierhilfsmittel hergestellt wurde.

Die homogene Einmischung flüssiger Additive ist ebenfalls problematisch. Flüssige Stoffe werden häufig in eine pulverförmige, rieselfähige Form gebracht, um diese Einmischung zu erleichtern. Bekannt ist hierbei die Verwendung von pyrogenen Kieselsäuren, die sich aufgrund ihrer hohen spezifischen Oberfläche und ihres großen Porenvolumens zur "Verfestigung" von Flüssigkeiten eignen. Diese Trägermaterialien haben aber den Nachteil, daß sie an sich nichts zum Bindemittelsystem beitragen und als inerte Füllstoffe beiliegen.

Aus der DE-A-3 610 755 sind Dichtwandmassen bekannt, die quellfähige Tonminerale mit Schichtgitterstruktur, wie Bentonite und Montmorillonite, enthalten. Diese werden vorzugsweise in Form von hochquellfähigem Natriumbentonit eingesetzt. Die Tonminerale sind Hauptbestandteile und keine Hilfsmittel für die Dichtwandmassen.

Aus der DE-C-4 205 354 ist eine Trockenmischung zur Herstellung von hydromechanisch förderbaren Baustoffsuspensionen bekannt, die als Hauptbestandteile 10 bis 80 Gew.-Teile hydraulische Bindemittel auf Zementklinkerbasis, 10 bis 80 Gew.-Teile Filterasche aus Kohlefeuerungen und 1 bis 20 Gew.-Teile quellfähige Tone enthalten. Bevorzugt werden hochquellfähige Tone eingesetzt.

Aus der DE-C-4 213 348 ist eine Bindemittelmischung zur einstufigen Herstellung von Dichtwänden bekannt, die als Hauptbestandteile 30 bis 82,7 Masse-% Hüttensand, 2,0 bis 1,0 Masse-% eines hydroxylionenbildenden Anregers und 15 bis 65,0 Masse-% Tonminerale enthält. Die Tonminerale liegen also in einem sehr hohen Anteil vor. Über ihre Quellfähigkeit ist nichts angegeben.

Aus der DE-A-2 715 305 ist eine Beschichtungsmasse für Mauerwerk, enthaltend einen Trägermaterialbestandteil und einen Pigment-Streckmittel-Bestandteil bekannt, die dadurch gekennzeichnet ist, daß sie einen Smektit-Ton und ein wasserlösliches Polymer enthält. Der Smektit-Ton liegt vorzugsweise in einer Menge von etwa 2 bis 15 Gew.-% vor. Über die Quellfähigkeit des Smektit-Tons finden sich keine Angaben.

Aus der DE-B-1 082 544 ist ein Verfahren zur Herstellung von frostbeständigem Mörtel und Beton bekannt, bei dem dem Mörtel oder dem Beton bzw. deren Bestandteilen Luftporenbildner und feinpulverige Adsorptionsmittel, wie Kieselsäure- und Aluminiumverbindungen, z.B. Zeolithe, Permutite, Bentonit, Kaolin, Tonerde oder aktive Kieselsäure, zugesetzt werden. Diese Zusätze sollen durch ihre Einwirkung auf die Luftporenbildner die Frostbeständigkeit erhöhen. Über die Quellfähigkeit der Adsorptionsmittel finden sich keine Angaben.

Die DE-C-736 842 und die DE-C-764 999 beziehen sich auf ein Verfahren zur Vergütung von Mörtel und Beton, das dadurch gekennzeichnet ist, daß den Mörtel- und Betonstoffen vor oder bei der Verarbeitung wasserlösliche Ligninderivate sowie Kieselgur bzw. andere oberflächenaktive Kieselsäuren und/oder entsprechende Silicate (z.B. Bentonit) zugesetzt werden. Die zuletzt genannten Zusätze sollen die Druckfestigkeit des Betons erhöhen und die Wasserdurchlässigkeit vermindern, wobei es auf eine große spezifische Oberfläche ankommen soll. Über das Quellvermögen der Zusätze finden sich keine Angaben.

Die DE-C-576 766 betrifft ein Verfahren zur Herstellung von farbigen Putzmörteln, wobei gefärbte, kolloidal verteilbare, natürliche oder künstliche Kieselsäuregele in Pulverform in hochsiedenden organischen Verbindungen zugesetzt werden. Bei dem als Beispiel angegebenem Bentonit handelt es sich um säureaktivierten Bentonit, da natürlicher oder alkalischer aktivierter Bentonit kein Kieselsäuregel enthält.

Die AT-A-280 134 betrifft ein Mörtel- bzw. Betonzusatzmittel, welches aus einer Mischung von Bentonit und lufteinführenden und/oder plastifizierenden Mitteln besteht. Das Quellvermögen des Bentonits ist nicht angegeben.

Aus der AT-A-268 132 (= CH-A-459 858) ist eine isolierende Mischung auf Basis von Zement und Sand bekannt, welche als Zusatzmittel einen aktivierten Alkalibentonit mit einem Quellvermögen von bis zu 1000% in einer Menge von bis zu 15 Gew.-% sowie eine andere Komponenten mit hydraulischen Eigenschaften als Zement, vorzugsweise Flugasche, sowie oberflächenaktive Substanzen und an sich bekannte Abbinderegler enthält. Die Verwendung von hochquellfähigen Alkalibentoniten in größeren Mengen führt jedoch zur Bildung von Trockenrissen.

Aus der CH-A-463 357 ist ein oberflächenaktives Zementhilfsmittel bekannt, welches feinteilige, feste, natürliche oder synthetische, anorganische, sauerstoffhaltige Siliciumverbindungen mit einem Überzug feinverteilter, oberflächenaktiver, nichtionogener Anlagerungsprodukte des Ethylenoxids enthält.

Aus der Firmenschrift der Süd-Chemie AG, Technische Informationen, TIXOTON CV 15, S. 1-3, ist die Verwendung von hochquellfähigen Bentonitsuspensionen in Verbindung mit Zement bekannt, wobei der Bentonit in Mengen von 17,5% eingesetzt wird.

Der Erfindung liegt die Aufgabe zugrunde, Hilfsmittel bzw. Hilfsmittelgemische für mineralische Bindemittelsysteme in einer Form zur Verfügung zu stellen, die das homogene Einmischen auch kleinster Mengen mit einer möglichst kleinen Anzahl von Mischoperationen bei der Herstellung der Bindemittelsysteme problemlos ermöglicht. Ferner sollen die Hilfsmittel nicht als inerte Füllstoffe ohne Wirkung im System verbleiben, sondern die Anwendungseigenschaften des fertigen Systems verbessern.

Diese Aufgabe wird erfindungsgemäß durch die Bereitstellung eines Hilfsmittels für mineralische Bindemittelsysteme gelöst, das mindestens ein feinteiliges quellfähiges Schichtsilicat und gegebenenfalls mindestens ein weiteres Additiv enthält, wobei der Anteil des quellfähigen Schichtsilicats bei mehr als 60 Gew.-% liegt und das Quellvolumen des Schichtsilicats etwa 5 bis 50 ml, bezogen auf eine Suspension von 2 g Schichtsilicat in 100 ml Wasser, beträgt. Unter einem feinteiligen Schichtsilicat versteht man im allgemeinen ein Produkt, das einen Siebrückstand auf 90 µm von maximal 20 Gew.-% aufweist.

Der Anteil des Hilfsmittel im mineralischen Bindemittelsystem beträgt im allgemeinen etwa 0,01 bis 5 Gew.-%, vorzugsweise etwa 0,01 bis 3 Gew.-%, insbesondere etwa 0,01 bis 0,9 Gew.-%, bezogen auf die Gesamtfeststoffe.

Das Quellvolumen wird wie folgt bestimmt:

Ein graduierter 100 ml-Meßzylinder wird mit 100 ml destilliertem Wasser gefüllt. 2 g des zu messenden Schichtsilicats werden langsam und portionsweise je etwa 0,1 bis 0,2 g, mit einem Spatel auf die Oberfläche des Wassers gegeben. Man wartet das Absinken der zugegebenen Portion ab, bevor man die nächste Portion zugibt. Nachdem die 2 g zugegeben und auf dem Grund des Meßzylinders abgesunken sind, wird nach 1 Stunde die Höhe der gequollenen Substanz, die sie im Meßzylinder einnimmt, in mm/2 g abgelesen.

Aufgrund der ausgeprägten Schichtstruktur bewirkt das erfindungsgemäß verwendete quellfähige Schichtsilicat bereits bei geringen Einsatzmengen von 0,1 bis 1 Gew.-% eine Plastifizierung und dadurch eine leichtere Verarbeitbarkeit von Bindemittelsystemen, wie Putzen, Mörteln, Estrichmassen usw.. Durch die interne Schmierwirkung der übereinander gleitenden Silicatplättchen werden auch der Pumpenverschleiß und der Pumpendruck z.B. bei Aufbereitungs-/Verarbeitungsmaschinen günstig beeinflußt, wobei die Fließgrenze und das Standvermögen der feuchten Bindemittelmasse jedoch nicht reduziert werden.

Erfindungsgemäß besteht das quellfähige Schichtsilicat im wesentlichen aus einem Mineral der Smektit-Gruppe, wie z.B. Bentonit, Montmorillonit, Hektorit, Saponit, Beidellit, Sauconit usw., natürlichen oder synthetischen Ursprungs bzw. aus Gemischen dieser Mineralien. Aus ökonomischen Gründen wird Bentonit bzw. Hektorit bevorzugt.

Die normalerweise hochquellfähigen Schichtsilicate der Smektit-Gruppe sind dabei nicht ohne weiteres geeignet, da aufgrund des hohen Quellvermögens die Gefahr besteht, daß bei Einsatz von mehr als 1 Gew.-% im Bindemittelsystem bei der Durchhärtung Risse auftreten können, da das Schichtsilicat eine zu starke Schwindung aufweist. Diese Eigenschaft hat bisher die Verwendung von größeren Mengen an quellfähigen Schichtsilicaten beschränkt. Erfahrungsgemäß läßt sich zwar die Rißbildung durch Zugabe von faserförmigem Material, wie Cellulosefasern, Polyethylenfaser usw. unterdrücken; diese Stoffe tragen aber nicht zur Plastifizierung des Bindemittels bei.

Hat das quellfähige Schichtsilicat andererseits eine zu geringe Quellfähigkeit, steht die spezifische Oberfläche, die für die Adsorption z.B. von flüssigen bzw. gelösten Additiven benötigt wird, nicht zur Verfügung. Außerdem werden dann die positiven Auswirkungen des quellfähigen Schichtsilicats auf die Verarbeitungseigenschaften (Schmierwirkung, Standvermögen, Plastifizierung) verringert.

Das quellfähige Schichtsilicat muß in diesem Fall durch alkalische Aktivierung, z.B. durch Ionenumtausch mit Alkali-Kationen, in die gewünscht Form gebracht werden. So kann z.B. bei Calciumbentoniten als Ausgangsmaterial das Quellvolumen durch Ionenumtausch mit Natriumionen, z.B. aus Natriumcarbonat, Natriumhydrogencarbonat, Natriumphosphaten, Na-Wasserglas usw., auf den gewünschen Wert angehoben werden.

Bei von Natur aus hochquellfähigen Natriumbentoniten hingegen ist ein Ionenumtausch mit zweiwertigen Kationen, wie Calciumionen, oder dreiwertigen Kationen, wie z.B. Aluminiumionen usw., geeignet, das Quellvolumen auf den gewünschten Wert abzusenken. Vorzugsweise hat das quellfähige Schichtsilicat ein Quellvolumen von etwa 5 bis 40 ml/g, insbesondere von 10 bis 30 ml/g.

Die Einschränkung des Quellvolumens auf mittlere Bereiche läßt sich im Falle von Bentontit auch am Verhältnis von mehrwertigen zu einwertigen austauschbaren Zwischenschichtkationen sehen. Eine weitgehende Anwesenheit von einwertigen Zwischenschichtkationen, insbesondere Natriumionen, bedingt eine hohe Quellbarkeit, die die vollständige Ablösung von Silicatlamellen voneinander erlaubt. Ist diese Quellung zu hoch, ist die Gefahr der Bildung von von Schwindungsrissen im mineralischen Bindemittelsystem während der Austrocknung und Abbindung sehr hoch. Im Gegensatz dazu bedingt eine überwiegende Anwesenheit von mehrwertigen Zwischenschichtkationen, insbesondere Calcium- und Magnesiumionen, eine Verhinderung der Ablösung der Silicatlamellen voneinander, was zu niedrigem Quellvolumen, aber auch zu reduzierter Geschmeidigkeit des mineralischen Bindemittelsystems führt. Ein ausgewogenes Verhältnis von mehrwertigen und einwertigen Zwischenschichtkationen bewirkt, daß durch Scherung oder Knetung Bänder von Silicatlamellen entstehen, bei dem die einzelnen Silicatlamellen noch zum Teil durch mehrwertige Kationen verbrückt und aneinandergehalten werden, während sich die einzelnen Bänder durch die einwertigen Kationen dazwischen voneinander lösen können. Eine solche Bänderstruktur bringt im mineralischen Bindemittelsystem eine hohe Geschmeidigkeit, ohne durch zu hohe Quellfähigkeit die Rißbildungstendenz zu erhöhen.

Auch Kombinationen von hochquellfähigen Schichtsilicaten mit weniger quellfähigen Extendersilicaten, wie Vermiculit, Illit, Glimmer, Pyrophyllit, Kaolin oder Talk sind für diesen Zweck geeignet. Wichtig ist dabei jedoch, daß alle diese Materialien eine ausgeprägte Schicht- oder Lamellenstruktur aufweisen, um die interne Schmierwirkung und Plastifizierung nicht zu reduzieren.

Aufgrund ihrer hohen spezifischen Oberfläche und ihres eigenen Wasserrückhaltevermögens sind die erfindungsgemäß verwendeten Schichtsilicate gut geeignet, auch flüssige Additive zu adsorbieren und in den pulverförmigen Zustand zu überführen. Aufgrund des hohen spezifischen Gewichtes der Schichtsilicate von etwa 2,6±0,5 g/cm$^3$ lassen sich die belegten Materialien problemlos mit den Bindemitteln und Zuschlagsstoffen homogen vermischen.

Während bei den bekannten Anwendungen Schichtsilicate, wie Bentonit, im wesentlichen als inerte Zuschlagstoffe in verschiedenen Zusatzmengen eingesetzt werden, stellt bei den erfindungsgemäßen Gemischen das Schichtsilicat einen wesentlichen Betandteil dar. Der Anteil des (der) Schichtsilicats(e) beträgt daher im allgemeinen mehr als 80 Gew.-%, vorzugsweise mehr als 90 Gew.-%. Das (die) weitere(n) Additiv(e) liegt(en) im allgemeinen in einer Menge von weniger als 40 Gew.-%, vorzugsweise von weniger als 20 Gew.-%, insbesondere von weniger als 10 Gew.-%, vor. Im allgemeinen liegt das Gewichtsverhältnis Schichtsilicat: Additiv in der Größenordnung von 80:20 bis bevorzugt von 90:10. Der Anteil der Additive kann bis herab zu 0,1 Gew.-% gehen.

Trotz dieses geringen Anteils der weiteren Additive und des Aufbringens auf das Schichtsilicat wird deren Wirkung nicht beeinflußt oder eingeschränkt.

Gegenstand der Erfindung ist auch ein Verfahren zur Herstellung der vorstehend beschriebenen Hilfsmittel; das Verfahren ist dadurch gekennzeichnet, daß das (die) weitere(n) Additiv(e) in fester oder flüssiger Form auf das (die) quellfähige(n) Schichtsilicat(e) aufgebracht werden, wobei diese entweder schon als vorbehandeltes Pulver oder aber als natürliches, grubenfeuchtes Material eingesetzt werden. Letzteres enthält noch etwa 20-60 Gew.-% Wasser. Falls das Schichtsilicat in einer Form zur Verfügung steht, die an sich nicht quellfähig ist (z.B. Bentonit in der Calciumform), so kann der Rohstoff durch Ionenumtausch mit geeigneten anderen Kationen zuvor in die gewünschte quellfähige Form überführt werden. In entsprechender Weise kann ein Schichtsilicat mit einem zu hohen Quellvermögen (z.B. Bentonit in der Natriumform) durch Ionenaustausch mit geeigneten, vorzugsweise mehrwertigen Kationen in den gewünschten Bereich der Quellfähigkeit gebracht werden. Der gewünschte Bereich der Quellfähigkeit kann auch z.B. durch eine Kombination eines Natriumbentonits mit einem Calciumbentonit eingestellt werden.

Die weiteren Additive werden entweder in das feuchte Schichtsilicat eingeknetet oder aber in gelöster Form auf das als Trägermaterial dienende trockene, gemahlene Schichtsilicat aufgebracht. Pulverförmige Hilfsmittel können in den üblichen Mischaggregaten homogen mit dem Trägermaterial vermischt werden, und/oder die Mischung kann durch gemeinsame Vermahlung hergestellt werden.

Welches Verfahren dabei bevorzugt wird, hängt von der Stabilität der aufzubringenden Hilfsmittel, wie Temperaturstabilität, Scherstabilität usw. ab. Bevorzugt werden die Mischungen auf Wassergehalte unter 50 Gew.-% getrocknet und in fein vermahlener Form eingesetzt.

Der Vorteil bei der Verwendung von quellfähigen Schichtsilicaten als Träger anstelle von anderen Bindemittelgemisch-Bestandteilen, wie Zement, Kalk, Sand usw. besteht in seiner Feinteiligkeit, Saugfähigkeit und reversiblen Wasserabgabe ohne chemische Veränderungen. Das Bindemittel als Träger für die weiteren Additive würde bei feuchter Einarbeitung abbinden und unbrauchbar werden. Sand als Füllstoff ist für die feuchte Einarbeitung von Additiven zu wenig saugfähig. Bei beiden Materialien besteht wegen der hohen spezifischen Gewichte die Gefahr der Entmischung mit feinteiligen Additiv-Pulvern.

Die Vorteile der Erfindung werden durch die nachstehenden Beispiele näher erläutert.

Beispiel 1

15 Teile Natriumtripolyphosphat-Pulver (Verzögerungsmittel) werden mit 85 Teilen trockenem Natriumbentonit-Pulver (Bentonit C, Quellvolumen 73ml) gemischt. Das Gemisch wird Portlandzement PZ 35 F zugesetzt. Die Erstarrungszeit wird nach DIN 1164, Teil 5, geprüft. Die Ergebnisse sind in Tabelle I angegeben.

Tabelle I

| Zusatz | Einsatzmenge Gew.-% | Erstarrungszeit (%) | |
|---|---|---|---|
| | | Beginn (min.) | Ende (min.) |
| Nullprobe | - | 110 | 180 |
| Bentonit C | 1 | 140 | 200 |
| Bentonit C | 2 | 175 | 235 |
| Gemisch | 1 | 260 | 300 |
| Gemisch | 2 | 350 | 580 |
| Verzögerungsmittel | 0,15 | 265 | 318 |
| Verzögerungsmittel | 0,3 | 362 | 595 |

Bentonit C hat allein nur eine unzureichende Verzögerungswirkung, während das Verzögerungsmittel auch in Mischung mit Bentonit verzögernd wirkt.

Beispiel 2

3 Teile Luftporenbildner-Pulver (Natriumalkylsulfonat-Pulver), 3 Teile Verflüssiger-Pulver (Melaminformaldehydkondensat-Sulfonat-Pulver) und 94 Teile trockenes Bentonit-Pulver B (teilaktivierter Calciumbentonit, Quellvolumen 25 ml) werden miteinander vermischt. Das Gemisch wird einer Unterputz-Mischung (Koch-Marmorit-Testsystem) zugesetzt. Bestimmt wird die Rohdichte und der Luftporengehalt des Unterputzes bei einer Einsatzmenge von 0,2 Gew.-% (Standard-Methode des Instituts für Kalk- und Mörtelforschung, Köln).
Die Ergebnisse sind in Tabelle II angegeben.

Tabelle II

| Zusatz | Rohdichte (kg/dm³) | Luftporengehalt (Vol.-%) |
|---|---|---|
| Nullprobe | 1,92 | 11,5 |
| Bentontit B | 1,91 | 13,0 |
| Gemisch | 1,80 | 18,0 |
| Luftporenbildner/Verflüssiger allein (0,012 %) | 1,79 | 18,3 |

Der Luftporenbildner wirkt auch im Gemisch mit Bentonit luftporenbildend.
Bentonit allein bewirkt eine geringfügige Erhöhung des Luftporengehalts, was auf die stabilisierende Wirkung (Fließgrenze) zurückzuführen ist.

Beispiel 3

5 Teile Verflüssiger (Melaminformaldehydkondensatsulfonat-Pulver) werden mit 95 Teilen Bentonit-Pulver B (Quellvolumen 25 ml) gemischt. Das Gemisch wird in einer Menge von 0,5 Gew.-% einer Kalkmörtelmischung (Firma Sakret) zugesetzt. Es wird die Viskosität des Kalkmörtels bei niedriger und hoher Schergeschwindigkeit gemessen und daraus der Strukturviskositätsindex bestimmt. Hierbei wird der Mörtel mit 30 Gew.-% Wasser angemacht, 40 Sekunden mit dem Spatel verrührt und 2 Minuten mit einem Korbrührer bei 750 U/min. gerührt. Anschließend wird in einem Haake Rotovico RV 11 (Drehkörper UV II P) die Viskosität nach einer Minute Rotation bei 3 U/min. gemessen. Nach einer Ruhepause von 1 min. wird die Viskosität nach einer weiteren Minute Rotation bei 162 U/min. bestimmt. Der Strukturviskositätsfaktor ergibt sich aus dem Quotienten der Viskositäten bei 3 U/min. und 162 U/min.

Die Ergebnisse sind in Tabelle III angegeben.

Tabelle III

| Zusatz | Strukturviskositätsfaktor (3/162 U/min.) |
|---|---|
| Nullprobe | 20,2 |
| Bentonit B | 20,8 |
| Gemisch | 18,0 |
| Verflüssiger | 15,1 |

Der Verflüssiger wirkt auch in Mischung mit Bentonit B verflüssigend.

Beispiel 4

Ein Portlandzement/Sand-Gemisch (1:3) wird mit 5 Gew.-% Bentonit B bzw. mit Bentonit B mit 5 Gew.-% des Verflüssigers von Beispiel 3 gemischt. Gemessen wird der nötige Wasserbedarf, um gleiche Verarbeitungskonsistenz zu erzielen (Standardmethode des Instituts für Kalk- und Mörtelforschung, Köln).

Die Ergebnisse sind in Tabelle IV angegeben.

Tabelle IV

| Probe | Wasserbedarf (%) |
|---|---|
| Nullprobe | 20 |
| Bentonit B | 25 |
| Bentonit B mit 5% Verflüssiger | 21 |
| Verflüssiger allein (0,25 %) | 17 |

Bentonit allein zeigt erwartungsgemäß aufgrund des entsprechenden Quellvermögens in Wasser eine Erhöhung des Wasserbedarfs. Der Verflüssiger reduziert den Wasserbedarf des Mörtels und wirkt somit auch in Mischung mit Bentonit verflüssigend.

Beispiel 5

3 Teile Ethylhydroxyethylcellulose-(EHEC)-Pulver werden mit 6 Teilen Verflüssiger (Melaminformaldehydkondenat-Sulfonat-Pulver) und 91 Teilen Bentonit-Pulver B gemischt. Das Gemisch wird in einer Menge von 0,5 Gew.-% einer Kalkmörtelmischung (Firma Sakret) zugesetzt. In dem Kalkmörtel wird das Wasserrückhaltevermögen wie folgt bestimmt:

Ein Zellstoffkarton (Schleicher & Schuell Nr. 2294) mit einem Durchmesser von 110 mm wird gewogen und auf eine Glasplatte gelegt. Darauf wird ein Trennpapier (Schleicher & Schuell Nr. 0988) mit einem Durchmesser von 110 mm aufgelegt und erneut gewogen. Auf diese Anordnung wird ein Kunststoffring mit einem Innendurchmesser von 90 mm, einem Außendurchmesser von 110 mm und einer Höhe von 15 mm gelegt und ebenfalls gewogen. In diese Anordnung werden 150 g der in einem Rührbecher von 0,5 l gerührten Kalkmörtelmischung (Nullprobe) bzw. der vorstehend angegebenen Gemische bis zum Rand des Kunststoffringes gefüllt. Die eingebrachte Menge wird gewogen. Nach 10 Minuten werden die Mischungen von dem Zellstoffkarton getrennt, der sofort zurückgewogen wird.

$$\text{Berechnung: WRV} = 100 - \left[\frac{100 \cdot A(1+W/F)}{W/F \cdot B}\right]$$

WRV = Wasserrückhaltevermögen in Prozent.

W/F = Wasser/Feststoff-Faktor
(Gesamtwassermenge des im Kunststoffring befindlichen Kalkmörtels entspricht 100%)

A = Wasseraufnahme des Zellstoffkartons und des Trennpapiers (letzteres hat eine gleichmäßige Wasseraufnahme von 0,16 g) in g

B = Die in den Kunststoffring eingefüllte Mörtelmenge in g

Die Ergebnisse sind in Tabelle V angegeben.

Tabelle V

| Zusatz | Wasserrückhaltevermögen nach 10 min. (%) |
|---|---|
| Nullprobe | 77 |
| Bentonit B | 81 |
| Gemisch ohne EHEC | 75 |
| Gemisch mit EHEC | 82 |
| EHEC allein (0,015 %) | 83,5 |

Bentonit hat selbst ein leichtes Wasserrückhaltevermögen. Der Verflüssiger im Gemisch mit Bentonit wirkt verflüssigend. Der Celluloseether erhöht auch in Mischung mit Bentonit das Wasserrückhaltevermögen.

Beispiel 6

2 bzw. 4 Gew.-% Natriumcarbonat werden mit Bentonit B in feuchtem Zustand (Wassergehalt etwa 35 Gew.-%) 5 Minuten verknetet, bei 75°C in einem Umluftofen getrocknet und gemahlen (Teilchengröße maximal 10% > 90$\mu$m). Das Gemisch wird in einer Menge von 3 Gewichtsteilen einem mineralischen Fliesenkleber mit folgender Zusammensetzung

40,0 Gew.Teile Zement PZ 45F
57,2 Gew.Teile Quarzsand 0,1 bis 0,25 mm
0,5 Gew.Teile Walocel MW 6000 PFV 50L [R] (Fa. Wolff-Walsrode)
3,0 Gew.Teile Bentonit B

zugesetzt.
Gemessen wird die Offenzeit des mineralischen Fliesenklebers nach folgender Methode:
Der Fliesenkleber wird mit einem Korbrührer (bei 300 U/min., 5 min. Aufschlußzeit) angemacht. Diese Fliesenklebermischung wird mit einer Zahnspachtel auf eine Gehwegbetonplatte aufgetragen. In die Mischung werden Steingutfliesen mit den Abmessungen 5,5 x 5,5 cm in Abständen von 5 Minuten bis insgesamt 30 Minuten eingelegt. Die Steingutfliesen werden jeweils 10 Sekunden mit einem Gewicht von 2 kg belastet und anschließend abgenommen. Dann wird die Kleberhaftung (Benetzung) auf der Fliesenrückseite in Prozent der Fliesenfläche bestimmt.
Die Ergebnisse sind in Tabelle VI angegeben.

Tabelle VI

| Zusatz | Benetzung der Fliese (%) nach | | | |
|---|---|---|---|---|
| | 5 min. | 10 min. | 15 min. | 20 min. |
| Bentonit B | 100 | 90 | 5 | 0 |
| Bentonit B + 2% $Na_2CO_3$ | 90 | 10 | 0 | 0 |
| Bentonit B + 4% $Na_2CO_3$ | 50 | 0 | 0 | 0 |

Der Abbindebeschleuniger $Na_2CO_3$ wirkt auch in Mischung mit Bentonit offenzeitverkürzend.

Beispiel 7

95 Gew.-% Bentonit B werden mit 5 Gew.-% des Verflüssigers von Beispiel 2 vermischt. Das Gemisch wird in einer Menge von 3 Gew.-% einem Fliesenkleber mit der Zusammensetzung von Beispiel 6 zugesetzt. Es wird das Abrutschgewicht der Fliese, d.h. das Standvermögen nach folgender Methode bestimmt:

Der Fliesenkleber wird mit einem Korbrührer (bei 300 U/min., 5 min. Aufschlußzeit) angemacht. Die Fliesenklebermischung wird mit einer Zahnspachtel senkrecht auf eine Gehwegbetonplatte aufgetragen. Dann wird eine Steinzeugfliese mit den Abmessungen 15x15 cm (284 g) aufgelegt und 5 Sekunden mit einem 5 kg-Gewicht belastet, so daß die Fliese voll benetzt wird. Danach wird die Platte ohne Erschütterungen senkrecht aufgestellt und der Anfangspunkt markiert. Die Abrutschweite wird mit einem Lineal gemessen; falls kein Abrutsch vorliegt, wird die Steingutfliese mit verschiedenen Gewichten belastet, so daß ein Abrutsch erfolgt.

Die Ergebnisse sind in Tabelle VII angegeben.

Tabelle VII

| Probe | Abrutschgewicht der Fliese |
|---|---|
| Nullprobe | 568 g |
| Bentonit B | 1.246 g |
| Bentonit und 5% Verflüssiger | 284 g |

Bentonit erhöht das Standvermögen des Fliesenklebers. Die Zugabe von Verflüssiger reduziert das Standvermögen.

Beispiel 8

0,3 Gew.-% Bentonit B werden in Kalkmörtel (Firma Sakret) gemischt. Die Probe und die Nullprobe werden mit Wasser auf ein Ausbreitsmaß von je 17 cm eingestellt. Gemessen wird die relative Viskosität bei hoher Scherung. Hierzu wird ein Haake Rotovisco RV 11 (Meßeinrichtung RS) verwendet. Als Viskosität werden die gemessenen Skalenteile nach 1 min. Rotation bei 486 U/min. abgelesen.

Die Ergebnisse sind in Tabelle VIII angegeben.

Tabelle VIII

| Probe | Wasserzusatz (%) | Ausbreitmaß (cm) | rel.Viskosität bei 486 U/min. (Skalentle.) (Haake RV11) |
|---|---|---|---|
| Nullprobe | 21,2 | 17,0 | 84 |
| Bentonit B | 22,6 | 17,0 | 53 |

Bei gleich eingestelltem Standvermögen gibt die Probe mit Bentonit eine niedrigere Viskosität bei hoher Scherung (z.B. Pumpen, Glätten) und zeigt somit eine leichtere Verarbeitkeit.

Beispiel 9

0,1 Gew.-% Bentonit B werden einem Kalk-Zement-Grundputz (Firma Gräfix) zugemischt und Spritzversuche mit einer Putzpumpe durchgeführt.
Die Ergebnisse sind in Tabelle IX angegeben.

Tabelle XI

|  | Pumpendruck (bar) | Stromaufnahme (A) |
|---|---|---|
| Nullprobe | 27 | 15,4 |
| mit 0,1 Gew.-% Bentonit B | 23,6 | 12,6 |

Bentonit ohne Zusätze bewirkt eine erleichterte Pump- und Verarbeitbarkeit von Putz. Damit wird auch der Pumpenverschleiß reduziert.

Beispiel 10

Einer Baustoffmischung (Solnhofer Putz und Mauerbinder DIN 4211) werden jeweils 1 Gew.-% Bentonit A (Calciumbentonit), B und C und Hectorit zugesetzt. Den Mischungen wird jeweils dieselbe Wassermenge (31 Gew. Teile Wasser, bezogen auf 100 Teile Feststoff) zugesetzt. Bestimmt wird das Ausbreitmaß nach der Standardmethode des Instituts für Kalk- und Mörtelforschung, Köln). Die Ergebnisse sind in Tabelle X angegeben.

Tabelle X

| Probe | Quellvolumen (ml) | Ausbreitmaß (cm) |
|---|---|---|
| Nullprobe | 0 | 16,1 |
| Bentonit A | 4,5 | 15,8 |
| Bentonit B | 25 | 15,0 |
| Bentonit C | 73 | 14,6 |
| Hectorit | 23 | 15,1 |

Je höher das Quellvolumen des Bentonits ist, desto geringer wird das Ausbreitmaß, d.h. desto größer wird das Standvermögen.
Der Bentonit A mit geringem Quellvolumen zeigt weniger Wirkung als die Bentonite B und C mit hohem Quellvermögen. Bentonite mit einem Quellvolumen von < 5% zeigen keine Verbesserung der Verarbeitungseigenschaften. Auch der Hectorit bewirkt eine Verbesserung der Verarbeitungseigenschaften.

Beispiel 11

1 Teil Portlandzement und 3 Teile Sand werden mit jeweils 5 Gew.-% Bentonit A, B und C und Hectorit versetzt und mit unterschiedlichen Wassermengen auf gleiche Verarbeitbarkeit eingestellt. Auf einer Gipskartonplatte werden damit 1 m lange, 15 cm breite und 1,5 cm hohe Mörtelstreifen aufgezogen, die man 1 Woche aushärten läßt. Beurteilt wird die Anzahl der entstehenden Risse.
Die Ergebnisse sind in Tabelle XI angegeben.

Tabelle XI

| Probe | Quellvolumen ml | Wasserbedarf (%) | Anzahl der Risse |
|---|---|---|---|
| Nullprobe | 0 | 20 | 0 |
| Bentonit A | 4,5 | 21 | 2 |
| Bentonit B | 25 | 25 | 2 |
| Bentonit C | 73 | 34 | 18 |
| Hectorit | 23 | 24 | 2 |

Je höher das Quellvolumen eines Schichtsilicats ist, desto höher ist der zusätzliche Wasserbedarf beim Anmachen und desto größer ist die Anzahl der beim Abbinden entstehenden Risse.

Es sind somit bei hohen Zusatzmengen und bei rißempfindlichen Anwendungen Schichtsilicate mit niedrigem Quellvolumen zu bevorzugen. Dadurch ist die Verwendung von Schichtsilicaten mit hohem Quellvolumen beschränkt, obwohl ein hohes Quellvolumen sich positiv auf das Standvermögen (siehe Beispiel 10) auswirken würde. Für die Anwendung im Baubereich ist somit ein definierter Bereich des Quellvolumens einzuhalten.

**Patentansprüche**

1. Hilfsmittel für mineralische Bindemittelsysteme, insbesondere für die Bauindustrie, enthaltend mindestens ein feinteiliges quellfähiges Schichtsilicat und gegebenenfalls mindestens ein weiteres Additiv, wobei der Anteil an quellfähigem Schichtsilicat bei mehr als 60 Gew.-% liegt und das Quellvolumen des Schichtsilicats etwa 5 bis 50 ml, bezogen auf eine Suspension von 2 g Schichtsilicat in 100 ml Wasser, beträgt.

2. Hilfsmittel nach Anspruch 1, dadurch gekennzeichnet, daß sein Anteil im mineralischen Bindemittelsystem etwa 0,01 bis 5 Gew.-%, bezogen auf die Gesamtfeststoffe, beträgt.

3. Hilfsmittel nach Anspruch 1 oder 2, dadurch gekennzeichnet, daß sein Anteil im mineralischen Bindemittelsystem etwa 0,01 bis 3 Gew.-%, vorzugsweise etwa 0,01 bis 0,9 Gew.-%, bezogen auf die Gesamtfeststoffe, beträgt.

4. Hilfsmittel nach einem der Ansprüche 1 bis 3, dadurch gekennzeichnet, daß der Anteil des (der) Schichtsilicats(e) mehr als 80 Gew.-%, vorzugsweise mehr als 90 Gew.-% beträgt.

5. Hilfsmittel nach einem der Ansprüche 1 bis 4, dadurch gekennzeichnet, daß das (die) weitere(n) Additiv(e) in einer Menge von weniger als 40 Gew.-%, vorzugsweise von weniger als 20 Gew.-%, insbesondere von weniger als 10 Gew.-%, vorliegt(en).

6. Hilfsmittel nach einem der Ansprüche 1 bis 5, dadurch gekennzeichnet, daß das quellfähige Schichtsilicat Bentonit, Montmorillonit, Hectorit, Saponit, Beidellit, Sauconit natürlichen oder synthetischen Ursprungs oder deren Gemische, gegebenenfalls mit einem Anteil an schichtförmigen Extendersilicaten, wie Vermiculit, Illit, Glimmer, Pyrophyllit, Talk, Kaolin und deren Gemische enthält.

7. Hilfsmittel nach einem der Ansprüche 1 bis 6, dadurch gekennzeichnet, daß das quellfähige Schichtsilicat bzw. das Gemisch aus quellfähigem Schichtsilicat und Extendersilicat ein Quellvolumen von etwa 5 bis 40 ml, vorzugweise von etwa 10 bis 30 ml aufweist.

8. Hilfsmittel nach einem der Ansprüche 1 bis 7, dadurch gekennzeichnet, daß das (die) weitere(n) Additiv(e) übliche Zusatzstoffe, wie Tenside, Luftporenbildner, Verflüssiger, Beschleuniger, Verzögerer, Wasserretentionshilfsmittel, Dichtungsmittel, Hydrophobierungsmittel, Schwindungsminderer oder andere gebräuchliche Additive darstellen.

9. Hilfsmittel nach einem der Ansprüche 1 bis 8, dadurch gekennzeichnet, daß das (die) quellfähige(n) Schichtsilicat(e) als Träger für das (die) weitere(n) Additiv(e) dient (dienen).

10. Verfahren zur Hertellung eines Hilfsmittels nach einem der Ansprüche 1 bis 9, dadurch gekennzeichnet, daß das (die) weitere(n) Additiv(e) in fester oder flüssiger Form auf das (die) quellfähige(n) Schichtsilicat(e) aufgebracht wird (werden), wobei das (die) Schichtsilicat(e) entweder schon als vorbehandeltes Pulver oder aber als natürliches, grubenfeuchtes Material eingesetzt wird (werden).

**11.** Verfahren nach Anspruch 10, dadurch gekennzeichnet, daß das (die) grubenfeuchte(n) Schichtsilicat(e) zunächst durch Verkneten mit Alkaliionen aktiviert wird (werden), worauf das (die) weitere(n) Additiv(e) eingemischt wird (werden) und das Gemisch ebenfalls getrocknet wird.

**12.** Verfahren nach Anspruch 10, dadurch gekennzeichnet, daß in den Fällen, in denen das (die) weitere(n) Additiv(e) nicht temperaturstabil ist (sind), ein vorgetrocknetes, alkalisch aktiviertes und gemahlenes Schichtsilicat als Träger verwendet wird.

**13.** Verfahren nach einem der Ansprüche 10 bis 12, dadurch gekennzeichnet, daß das (die) weitere(n) Additiv(e) in flüssiger oder fester Form mit dem (den) Schichtsilicat(en) vermischt wird (werden), wobei ein Gesamtwassergehalt von 50 Gew.-% nicht überschritten wird, worauf das Gemisch unter Vermahlung auf einen Wassergehalt von maximal 20 Gew.-%, vorzugsweise von 5 bis 15 Gew.-%, getrocknet wird.

**14.** Verwendung eines Hilfsmittels nach einem der Ansprüche 1 bis 9 bzw. hergestellt nach einem der Ansprüche 10 bis 13 als Plastifizierungsmittel in mineralischen Bindemittelsystemen.

**15.** Verwendung eines Hilfsmittels nach einem der Ansprüche 1 bis 9 bzw. hergestellt nach einem der Ansprüche 10 bis 13 als Träger für weitere Additive aus der Gruppe der üblichen Zusatzmittel.

## Claims

**1.** A supplementary agent for mineral binder systems, especially for the construction industry, containing at least one finely divided layered silicate capable of swelling and, optionally, at least one further additive, wherein the proportion of layered silicate capable of swelling is more than 60 % by weight and the swelling volume of the layered silicate is approximately 5 to 50 ml, in relation to a suspension of 2 g of layered silicate in 100 ml of water.

**2.** A supplementary agent according to Claim 1, characterised in that its proportion in the mineral binder system is approximately 0.01 to 5 % by weight, in relation to the total solids.

**3.** A supplementary agent according to Claim 1 or 2, characterised in that its proportion in the mineral binder system is preferably approximately 0.01 to 0.9 % by weight, in relation to the total solids.

**4.** A supplementary agent according to any one of Claims 1 to 3, characterised in that the proportion of the layered silicate(s) is more than 80 % by weight, preferably more than 90 % by weight.

**5.** A supplementary agent according to any one of Claims 1 to 4, characterised in that the further additive(s) is/are present in a quantity of less than 40 % by weight, preferably of less than 20 % by weight, in particular of less than 10 % by weight.

**6.** A supplementary agent according to any one of Claims 1 to 5, characterised in that the layered silicate capable of swelling contains bentonite, montmorillonite, hectorite, saponite, beidellite, sauconite of natural or synthetic origin or mixtures thereof, optionally with a proportion of layered extender silicates, such as vermiculite, illite, mica, pyrophyllite, talcum, kaolin and mixtures thereof.

**7.** A supplementary agent according to any one of Claims 1 to 6, characterised in that the layered silicate capable of swelling and/or the mixture of layered silicate capable of swelling and extender silicate has a swelling volume of approximately 5 to 40 ml, preferably of approximately 10 to 30 ml.

**8.** A supplementary agent according to any one of Claims 1 to 7, characterised in that the further additive(s) is/are conventional additives, such as surfactants, air-entraining additives, liquefiers, accelerators, retarders, water-retention additives, sealing compounds, water-repelling agents, shrinkage reducers or other common additives.

**9.** A supplementary agent according to any one of Claims 1 to 8, characterised in that the layered silicate(s) capable of swelling serve(s) as a support for the further additive(s).

**10.** A method of preparing a supplementary agent according to any one of Claims 1 to 9, characterised in that the further additive(s) is/are applied in solid or liquid form on to the layered silicate(s) capable of swelling, wherein the layered silicate(s) capable of swelling is/are used either already in the form of pretreated powder or of a natural freshly mined material.

**11.** A method according to Claim 10, characterised in that the freshly mined layered silicate(s) is/are firstly activated by kneading with alkaline ions, whereupon the further additive(s) are mixed in and the mixture is also dried.

**12.** A method according to Claim 10, characterised in that in cases in which the further additive(s) is/are not temperature-stable, a previously dried, alkaline-activated and ground layered silicate is used as support.

**13.** A method according to any one of Claims 10 to 12, characterised in that the further additive(s) is/are mixed in liquid or solid form with the layered silicate(s), wherein the total water content of 50 % by weight is not exceeded, whereupon the mixture is dried with grinding to a water content of at maximum 20 % by weight, preferably of 5 to 15 % by weight.

**14.** Use of a supplementary agent according to any one of Claims 1 to 9 and prepared according to any of Claims 10 to 13 as a plasticiser in mineral binder systems.

**15.** Use of a supplementary agent according to any one of Claims 1 to 9 and prepared according to any of Claims 10 to 13 as a support for further additives from the group of conventional additives.

## Revendications

**1.** Adjuvant pour systèmes liants minéraux, en particulier pour l'industrie du bâtiment, contenant au moins un silicate lamellaire gonflable finement divisé et éventuellement au moins un autre additif, la quantité du silicate lamellaire gonflable étant supérieure à 60 % en poids, et le volume de gonflement du silicate lamellaire étant d'environ 5 à 50 ml, par rapport à une suspension de 2 g de silicate lamellaire dans 100 ml d'eau.

**2.** Adjuvant selon la revendication 1, caractérisé en ce qu'il est présent dans le système liant minéral en une quantité d'environ 0,01 à 5 % en poids par rapport à l'extrait sec total.

**3.** Adjuvant selon la revendication 1 ou 2, caractérisé en ce qu'il est présent dans le système liant minéral en une quantité d'environ 0,01 à 3 % en poids, de préférence d'environ 0,01 à 0,9 % en poids par rapport à l'extrait sec total.

**4.** Adjuvant selon l'une des revendications 1 à 3, caractérisé en ce que le ou les silicates lamellaires sont présents en une quantité supérieure à 80 % en poids, de préférence supérieure à 90 % en poids.

**5.** Adjuvant selon l'une des revendications 1 à 4, caractérisé en ce que le ou les autres additifs sont présents en une quantité inférieure à 40 % en poids, de préférence inférieure à 20 % en poids, en particulier inférieure à 10 % en poids.

**6.** Adjuvant selon l'une des revendications 1 à 5, caractérisé en ce que le silicate lamellaire gonflable contient de la bentonite, de la montmorillonite, de l'hectorite, de la saponite, de la beidellite, de la sauconite d'origine naturelle ou synthétique, ou leurs mélanges, éventuellement avec une certaine quantité de silicates diluants lamellaires, tels que la vermiculite, l'illite, le mica, la pyrophyllite, le talc, le kaolin et leurs mélanges.

**7.** Adjuvant selon l'une des revendications 1 à 6, caractérisé en ce que le silicate lamellaire gonflable ou le mélange de silicate lamellaire gonflable et de silicate diluant présente un volume de gonflement d'environ 5 à 40 ml, de préférence d'environ 10 à 30 ml.

**8.** Adjuvant selon l'une des revendications 1 à 7, caractérisé en ce que le ou les autres additifs représentent des additifs usuels tels que des tensioactifs, des entraîneurs d'air, des fluidifiants, des accélérateurs de prise, des retardateurs de prise, des agents de rétention d'eau, des hydrofuges de masse, des agents d'hydrophobisation, des réducteurs de retrait ou d'autres additifs usuels.

**9.** Adjuvant selon l'une des revendications 1 à 8, caractérisé en ce que le ou les silicates lamellaires gonflables servent de supports pour le ou les autres additifs.

**10.** Procédé pour préparer un adjuvant selon l'une des revendications 1 à 9, caractérisé en ce que le ou les autres additifs sous forme solide ou liquide sont appliqués sur le ou les silicates lamellaires gonflables, le ou les silicates lamellaires étant déjà mis en oeuvre sous forme d'une poudre prétraitée, ou encore sous forme d'un matériau naturel, à humidité de carrière.

**11.** Procédé selon la revendication 10, caractérisé en ce que le ou les silicates lamellaires à humidité de carrière sont d'abord activés par malaxage avec des ions de métaux alcalins, ce après quoi le ou les autres additifs sont incorporés par mélange, et le mélange est lui aussi séché.

**12.** Procédé selon la revendication 10, caractérisé en ce que, dans les cas dans lesquels le ou les autres additifs ne sont pas stables aux hautes températures, on utilise comme support un silicate lamellaire ayant subi un séchage préalable et une activation par un métal alcalin, et un broyage.

**13.** Procédé selon l'une des revendications 10 à 12, caractérisé en ce que le ou les autres additifs sont, sous forme solide ou liquide, mélangés au ou aux silicates lamellaires, auquel cas on ne dépasse pas une teneur totale en eau de 50 % en poids, ce après quoi le mélange est séché, tout en étant broyé, jusqu'à une teneur en eau au plus égale à 20 % en poids et de préférence de 5 à 15 % en poids.

**14.** Utilisation d'un adjuvant selon l'une des revendications 1 à 9 ou préparé selon l'une des revendications 10 à 13, en tant que plastifiant dans des systèmes liants minéraux.

**15.** Utilisation d'un adjuvant selon l'une des revendications 1 à 9 ou préparé selon l'une des revendications 10 à 13, comme support pour d'autres additifs du groupe des additifs usuels.